# FASCICULE DE BREVET EUROPEEN

(11) **EP 2 660 051 B1**
(45) Date de publication et mention de la délivrance du brevet: **15.10.2014**
(21) Numéro de dépôt: 13165598.7
(22) Date de dépôt: 26.04.2013
(51) Int. Cl.: B32B 27/08, G02B 1/10

(54) **Film anti-abrasif et lentille ophtalmique le contenant**
Abriebfeste Beschichtung, und diese umfassende Kontaktlinse
Abrasion-resistant film and ophthalmic lens containing same

(30) Priorité: 04.05.2012 FR 1254121
(43) Date de publication de la demande: 06.11.2013
(73) Titulaire: ESSILOR INTERNATIONAL (Compagnie Générale d'Optique), 94220 Charenton le Pont (FR)
(72) Inventeur: Saint-Lu, Charlotte, 94220 CHARENTON-LE-PONT (FR); Cretier, Annette, 94220 CHARENTON-LE-PONT (FR); Clipet, Christelle, 94220 CHARENTON-LE-PONT (FR); Bonnet, Isabelle, 94220 CHARENTON-LE-PONT (FR)
(74) Mandataire: Cabinet Plasseraud

(56) Documents cités:
- EP-A1- 2 051 110
- US-A- 5 015 523

## Description

La présente invention concerne un film anti-abrasif comprenant un film thermoplastique transparent et un revêtement composite anti-abrasif, formé d'une couche inférieure en contact avec le film thermoplastique et d'une couche supérieure superposée à la couche inférieure, lesdites couches renfermant chacune un époxysilane et un alcoxysilane hydrolysés, dans des rapports en poids différents. Elle concerne également un article optique multicouche, de préférence une lentille ophtalmique, comprenant un substrat transparent, une couche adhésive et le film anti-abrasif précité, ainsi que deux procédés de fabrication d'un tel article.

Le développement d'articles ophtalmiques fabriqués à partir de substrats en verre organique, plus légers que les substrats en verre minéral, a nécessité de mettre au point des revêtements protecteurs présentant une bonne résistance à l'abrasion, du fait que le verre organique est connu pour présenter une plus grande sensibilité à l'abrasion que le verre minéral classique. Les verres organiques sont donc généralement protégés contre l'abrasion en leur appliquant une composition d'enduction à base d'hydrolysats de silanes qui, après durcissement thermique ou photochimique, en présence d'un catalyseur à base d'aluminium, produit un vernis anti-abrasif qui permet aux verres organiques d'être manipulés et portés sans dommages.

Le document WO 2008/062142 décrit ainsi un vernis anti-abrasif, présentant par ailleurs une bonne résistance aux rayures, constitué d'une couche inférieure, appliquée sur un substrat en verre organique et d'une couche supérieure appliquée sur la couche inférieure. Les couches inférieure et supérieure sont chacune préparées à partir d'un époxysilane, tel que le γ-glycidoxypropyltriméthoxysilane (GLYMO), et d'un silane hydrolysable, tel qu'un alcoxysilane, en particulier le tétraéthoxysilane (TEOS), mais elles diffèrent l'une de l'autre par le rapport en poids, en matière sèche, de l'époxysilane à l'alcoxysilane, qui est plus élevé dans la couche inférieure, de façon à obtenir un gradient de dureté entre les deux couches.

Les vernis anti-abrasifs de l'art antérieur ont toutefois pour inconvénient de réduire de manière indésirable la résistance aux chocs des lentilles ophtalmiques organiques. Une approche pour résoudre ce problème, suggérée dans le document WO 2008/062142, a consisté à interposer, entre le verre organique et le vernis anti-abrasion, une couche de primaire en élastomère, tel qu'un latex de polyuréthane. Ce primaire, déposé sous forme de composition liquide puis éventuellement réticulé, absorbe non seulement les chocs reçus par le vernis anti-abrasif mais assure également la bonne adhérence du vernis anti-abrasif sur le substrat. Son épaisseur est généralement comprise entre 1 et environ 20 µm. Pour des verres très fins qui présentent, en certains endroits, des épaisseurs de l'ordre de 1 mm seulement, le pouvoir anti-choc de tels systèmes bicouches (primaire élastomère + vernis anti-abrasion) s'avère toutefois insuffisant. Il est en effet impossible d'accroître l'épaisseur du primaire élastomère au-delà d'une certaine limite sous peine d'obtenir des verres diffusants, inacceptables dans le domaine ophtalmique.

Par ailleurs, l'ajout d'une couche de primaire augmente la complexité du procédé de fabrication de l'article optique, en particulier de celui décrit dans WO 2008/062142. En effet, ce procédé nécessite d'appliquer successivement sur le substrat la couche de primaire, la couche inférieure et la couche supérieure, généralement par trempage ou centrifugation, chacune des couches étant durcie au moins partiellement par chauffage après application. En outre, on a fréquemment recours à un traitement de surface de la couche inférieure afin d'améliorer l'adhérence de la couche supérieure, qui est généralement conduit sous vide. La préparation des couches anti-abrasion nécessite par ailleurs l'utilisation d'un acide fort tel que l'acide chlorhydrique, pour hydrolyser le mélange de silanes, ainsi que d'un solvant organique, tel que le méthanol, qui doivent être manipulés avec précaution. On comprend que la mise en oeuvre de toutes ces étapes requiert non seulement du temps, mais également l'emploi d'équipements divers, tels que des bacs, des étuves et des équipements d'enduction, que les laboratoires de fabrication de lentilles ophtalmiques ne possèdent généralement pas, ainsi que la manipulation de substances chimiques toxiques.

Il serait donc souhaitable de pouvoir disposer d'un moyen permettant de conférer à un article optique une résistance à l'abrasion et aux chocs qui soit plus simple et moins coûteux que les solutions de l'art antérieur.

Or, il est apparu à la Demanderesse que ce besoin pouvait être satisfait en mettant à disposition des laboratoires de fabrication d'articles optiques un film anti-abrasif, comprenant un film transparent thermoplastique et un revêtement anti-abrasif appliqué sur l'une des faces du film thermoplastique. Ce film anti-abrasif peut être fabriqué en usine et fourni au laboratoire sous forme pré-encollée afin que ce dernier n'ait plus besoin que de fixer le film sur l'une au moins des faces du substrat. En outre, le film anti-abrasif selon l'invention peut être aisément mis en oeuvre dans la fabrication d'un article optique dans la mesure où il supporte bien les étapes de lamination des colles optiques et de glissement, ainsi que le thermoformage.

Il est, certes, déjà connu d'appliquer des films thermoplastiques sur des substrats en verre organique en vue d'améliorer leur résistance à l'abrasion. De tels films sont notamment commercialisés par la société NOF sous la dénomination commerciale Realook®. Toutefois, ces films ne présentent qu'une faible résistance à l'abrasion, caractérisée par une valeur BAYER ISTM comprise entre 1 et 2. En outre, il a été démontré que l'application sur un film thermoplastique nu d'un vernis anti-abrasion tel que décrit à l'Exemple 3 de la demande EP 0 614 957, comprenant du GLYMO comme époxysilane et le DMDES comme alkylalcoxysilane, permettait d'obtenir une résistance à l'abrasion un peu supérieure mais néanmoins inférieure à 3 dans le test BAYER ISTM.

Or, la Demanderesse a mis au point un film anti-abrasif comprenant un revêtement anti-abrasif composite qui permet d'atteindre des valeurs de BAYER ISTM d'au moins 7, généralement comprises entre 8 et 10.. En outre, ces films confèrent à l'article optique les contenant une bonne résistance aux chocs et aux rayures, sans affecter négativement les propriétés optiques des verres, même les plus fins. Ils adhèrent également parfaitement aux verres organiques.

La présente invention a par conséquent pour objet un film anti-abrasif comprenant :
(a) un film transparent en polymère thermoplastique, et
(b) un revêtement composite anti-abrasif recouvrant le film transparent, ledit revêtement comprenant :
   (i) une couche inférieure disposée sur le film transparent, obtenue par hydrolyse puis durcissement d'une composition de couche inférieure comprenant au moins un époxysilane et au moins un alcoxysilane, dans un rapport en poids (Ri), en matière sèche, de l'époxysilane à l'alcoxysilane d'au moins 3,
   (ii) une couche supérieure disposée sur la couche inférieure, obtenue par hydrolyse puis durcissement d'une composition de couche supérieure comprenant au moins un époxysilane et au moins un alcoxysilane, dans un rapport en poids (Rs), en matière sèche, de l'époxysilane à l'alcoxysilane d'au plus 2.

L'invention a également pour objet un article optique, notamment une lentille ophtalmique, comprenant :
(a) un substrat transparent en verre organique,
(b) une couche adhésive recouvrant au moins une des faces du substrat transparent, et
(c) un film anti-abrasif tel que défini précédemment.

La présente invention a également pour objet deux procédés de fabrication d'un tel article optique. Les deux procédés, décrits en détail ci-dessous diffèrent l'un de l'autre essentiellement par le fait que, dans un des procédés, la couche adhésive est d'abord appliquée sur l'une des faces du film anti-abrasif, alors que dans le deuxième procédé la couche adhésive est appliquée sur le substrat. Dans ce dernier cas, le substrat couvert de la couche adhésive reçoit ensuite le film anti-abrasif.

Plus précisément, la présente invention a pour objet un premier procédé de fabrication d'un article optique selon l'invention, de préférence d'une lentille ophtalmique, comprenant :
A. la mise à disposition d'un substrat organique transparent, de préférence d'un substrat de lentille ophtalmique,
B. la mise à disposition d'au moins un film anti-abrasif selon l'invention, renfermant une couche d'adhésif appliquée sur la face du film transparent opposée à celle portant le revêtement anti-abrasif,
C. la mise en contact de la couche d'adhésif du film anti-abrasif avec le substrat organique, et
D. l'application d'une pression uniforme sur toute la zone de contact de manière à faire adhérer le film anti-abrasif sur le substrat organique.

Le film anti-abrasif mis en oeuvre dans l'étape D peut être éventuellement préalablement thermoformé.

Elle a également pour objet un deuxième procédé de fabrication d'un article optique selon l'invention, de préférence d'une lentille ophtalmique, comprenant :
a. la mise à disposition d'un substrat organique transparent, de préférence d'un substrat de lentille ophtalmique, recouvert sur au moins une de ses faces d'une couche d'adhésif,
b. la mise à disposition d'au moins un film anti-abrasif selon l'invention,
c. la mise en contact de la face du film anti-abrasif portant le film transparent avec la couche d'adhésif, et
d. l'application d'une pression uniforme sur toute la zone de contact de manière à faire adhérer le film anti-abrasif sur le substrat organique.

Le substrat organique de l'article optique de la présente invention peut être n'importe quel substrat organique couramment utilisé dans le domaine optique et en particulier ophtalmique.

On peut citer à titre d'exemples les substrats en polycarbonate, en polyamide, en polyimide, en polysulfone, en copolymères de poly(éthylène téréphtalate) et de polycarbonate, en polyoléfines, notamment en polynorbornène, en homopolymères et copolymères d'allylcarbonates de polyols, notamment de diéthylèneglycol bis(allylcarbonate), en polymères et copolymères de (méth)acrylates d'alkyle ou de (méth)acrylates aromatiques polyéthoxylés, notamment dérivés de bisphénol A, en polymères et copolymères thio(méth)acryliques, en poly(thio)uréthane, en polymères et copolymères époxy et en polymères et copolymères d'épisulfure.

Le substrat organique peut être soumis, avant application ou mise en contact avec la couche d'adhésif, à un traitement de surface généralement destiné à améliorer l'adhérence, tel qu'un traitement physique, par exemple par décharge corona, par plasma sous vide ou par bombardement ionique, ou un traitement de surface chimique, par exemple un traitement sodique à chaud sous ultrasons.

Le film anti-abrasif, collé dans la présente invention *via* une couche adhésive sur le substrat en verre organique, est constitué :
- d'une couche formée d'un polymère thermoplastique transparent, et
- d'un revêtement anti-abrasif déposé sur une des faces de la couche thermoplastique.

Le polymère thermoplastique doit être un polymère transparent, c'est-à-dire un polymère présentant une diffusion inférieure à 0,5 %, de préférence comprise entre 0,2 et 0,3 % et un facteur de transmission au moins égal à 90 %, de préférence compris entre 93% et 98 % (ces mesures de diffusion et de facteur de transmission sont réalisées selon la norme ASTM D1003 sur un appareil Haze Guard). Sa température de transition vitreuse est supérieure à la température d'utilisation de l'article optique, qui est le plus souvent la température ambiante. Elle est généralement comprise entre 50 °C et 250 °C, de préférence entre 70 et 200 °C, telle que mesurée par analyse mécanique dynamique. A la température d'utilisation, le film polymère thermoplastique n'est donc pas à l'état plastique mais à l'état vitreux, rigide et cassant.

On utilisera de préférence en tant que film thermoplastique transparent pour la mise en oeuvre de la présente invention un film en poly(éthylène téréphtalate) ou PET, ayant avantageusement une température de transition vitreuse (Tg), mesurée par DMA (analyse mécanique dynamique) comprise entre 50°C et 150°C, ou un film de triacétate de cellulose ou TAC ayant par exemple une Tg entre 100 et 180 °C. L'épaisseur de ce film en polymère thermoplastique est de préférence comprise entre 50 µm et 150 µm, en particulier entre 60 µm et 100 µm.

Ce film polymère est revêtu sur une de ses faces d'un revêtement anti-abrasif constitué d'une couche supérieure et d'une couche inférieure, dont chacune renferme un époxysilane et un alcoxysilane hydrolysés.

Les époxysilanes utilisables selon l'invention répondent avantageusement à la formule (I) :

RₙYₘSi(X)₄₋ₙ₋ₘ (I)

où R désigne un groupe organique monovalent lié au silicium par un atome de carbone et contenant au moins une fonction époxy, X désigne un groupe hydrolysable, Y désigne un groupe organique monovalent lié au silicium par un atome de carbone et ne contenant pas de fonction époxy, et n et m sont des entiers tels que : n = 1 ou 2 avec n + m = 1 ou 2.

Les groupes X peuvent désigner, indépendamment les uns des autres, des groupes -OR₁ où R₁ désigne un groupe alkyle linéaire ou ramifié, de préférence en C₁-C₄, un groupe alcoxyalkyle ou acyloxy, un atome d'halogène ou un groupe amino éventuellement substitué par un ou deux groupes alkyle ou silane. On préfère que X désigne un groupe alcoxy. Après hydrolyse, les groupes X conduisent à des groupes OH. De son côté, le groupe R contient de préférence au moins une fonction époxy, de préférence une seule fonction époxy telle qu'une fonction oxirane. Lorsqu'il est présent, le groupe Y peut être un groupe hydrocarboné, saturé ou insaturé, en C₁-C₁₀ et, mieux, en C₁-C₄, tel qu'un groupe alkyle.

Parmi les époxysilanes de formule (I), on préfère ceux de formule RSi(X)₃. Des exemples de tels époxysilanes sont le γ-glycidoxypropyl triéthoxysilane, le γ-glycidoxypropyl triméthoxysilane, le 2-(3,4-époxycyclohexyl) éthyltriméthoxysilane, et le 2-(3,4-époxycyclohexyl) éthyltriéthoxysilane. On préfère utiliser le le γ-glycidoxypropyl triméthoxysilane (GLYMO) dans cette invention.

De son côté, l'alcoxysilane utilisé dans la présente invention répond de préférence à la formule (II) :

Si(OR')₄ (II)

dans laquelle les groupes R' sont identiques ou différents les uns des autres et désignent des groupes alkyle linéaires en C₁-C₆ ou ramifiés en C₃-C₆.

Des exemples de tels alcoxysilanes sont les orthosilicates de tétraalkyle tels que le tétraéthoxysilane (ou TEOS), le tétraméthoxysilane (ou TMOS), le tétra(n-propoxy)silane, le tétra(iso-propoxy)silane, le tétra(n-butoxy)silane, le tétra(sec-butoxy)silane et le tétra(t-butoxy)silane, le TEOS étant préféré pour une utilisation dans cette invention.

Il est bien entendu que l'époxysilane de la couche supérieure peut être identique à celui de la couche inférieure ou distinct de celui-ci. On peut par ailleurs utiliser des mélanges d'époxysilanes dans l'une des couches ou dans les deux. De même, l'alcoxysilane de la couche supérieure peut être identique à celui de la couche inférieure ou distinct de celui-ci. On peut par ailleurs utiliser des mélanges d'alcoxysilanes dans l'une des couches ou dans les deux.

Les hydrolysats d'époxysilanes et d'alcoxysilanes utilisés selon l'invention sont préparés de manière classique, en ajoutant un acide minéral tel que l'acide chlorhydrique ou phosphorique, dans une solution de ces composés dans l'eau et/ou un solvant organique tel que le méthanol.

La formulation des couches supérieure et inférieure peut renfermer, outre au moins un époxysilane, au moins un alcoxysilane, un solvant et un acide minéral, tels que décrits ci-dessus, au moins un catalyseur de condensation, tel qu'un composé renfermant plusieurs fonctions acide carboxylique ou anhydride carboxylique, de préférence l'acide itaconique. ou en variante l'acide trimellitique ou l'anhydride trimellitique. En variante ou en plus, cette formulation peut contenir au moins un catalyseur de durcissement, tel qu'un composé à base d'aluminium, en particulier l'acétylacétonate d'aluminium, le dicyandiamide ou leurs mélanges. Par ailleurs, on peut inclure dans la formulation au moins un composé choisi parmi : un tensioactif fluoré ou siliconé, une charge minérale, un chélatant, un absorbeur UV, et leurs mélanges.

Comme indiqué précédemment, les couches supérieure et inférieure se différencient l'une de l'autre par le rapport en poids de l'époxysilane à l'alcoxysilane qu'elles contiennent. Ainsi, dans la couche inférieure, le rapport en poids (Ri), en matière sèche, de l'époxysilane à l'alcoxysilane est d'au moins 3, de préférence d'au moins 3,5 voire d'au moins 4 ou au moins égal à 4,5. Dans la couche supérieure, le rapport en poids (Rs), en matière sèche, de l'époxysilane à l'alcoxysilane est d'au plus 2, de préférence d'au plus 1,5, voire d'au plus 1.

L'épaisseur du revêtement anti-abrasif constitué par les deux couches précitées est similaire à celle des revêtements anti-abrasifs connus et est généralement comprise entre 1 et 15 µm, de préférence comprise entre 2 et 10 µm, l'épaisseur de la couche inférieure étant plus grande que celle de la couche supérieure.

Dans un premier mode de réalisation de l'invention, le film thermoplastique reçoit, sur sa face opposée à celle portant le revêtement anti-abrasif, une mince couche d'adhésif.

Dans un second mode de réalisation, la couche d'adhésif est appliquée sur au moins l'une des faces de substrat.

Dans tous les cas, différentes familles d'adhésifs peuvent être mises en oeuvre dans le cadre de l'invention. Ces adhésifs présentent de préférence un module élastique, ou module d'Young, inférieur à celui du substrat et inférieur à celui du film thermoplastique. D'une façon générale l'adhésif présente un module élastique à température ambiante compris entre 10³ et 10⁷ Pa (Pascal). Parmi les adhésifs particulièrement adaptés à l'invention on peut citer notamment les adhésifs sensibles à la pression (ou PSA pour *Pressure Sensitive Adhesive*) et les adhésifs thermofusibles (ou HMA pour *Hot Melt Adhesives*).

Par PSA, on comprend un adhésif de contact sec, généralement de nature viscoélastique, qui ne nécessite qu'une faible pression pour adhérer sur la surface de contact. Les PSA sont caractérisés par le fait qu'ils ne nécessitent pas d'activation par l'eau, un solvant ou par chauffage pour exercer leur caractère adhésif de façon permanente sur une surface de contact. Avantageusement, l'adhésif sensible à la pression (PSA) utilisé est choisi dans le groupe formé par un composé à base de polyacrylate, un copolymère à blocs à base de styrène et un mélange contenant un caoutchouc naturel. Plus particulièrement, on peut citer à tire d'exemples et de façon non limitative, les PSA de compositions générales à base de polyacrylates, de polyméthacrylates, de copolymères éthyléniques tels que les copolymères éthylène-acétate de vinyle, éthylène-acrylate d'éthyle et éthylène-méthacrylate d'éthyle, les PSA à base de caoutchouc synthétique et les élastomères incluant les silicones, les polyuréthanes, les styrène-butadiènes, les polybutadiènes, les polyisoprènes, les polypropylènes, les polyisobutylènes, les PSA à base de polymères comprenant des nitriles ou acrylonitriles, les PSA à base de polychloroprène, les PSA à base de copolymères séquencés comprenant des blocs polystyrène, polyéthylène, polypropylène, polyisoprène ou polybutadiène, ainsi que les mélanges de ces polymères.

Ces PSA peuvent également contenir un ou plusieurs additifs choisis notamment parmi les agents de pégosité (*tackifier*), les plastifiants, les liants, les antioxydants, les stabilisants, les pigments, les colorants, les agents dispersants, et les agents diffusants. D'une façon préférentielle, dans le cadre de l'invention, on utilisera un PSA à base de polyacrylate. Pour l'application envisagée dans la présente invention, il est important de choisir le PSA de manière à ne pas réduire de façon indésirable la transparence de l'article optique obtenu. La couche de PSA peut bien entendu présenter un aspect trouble *avant* application sur le substrat organique mais ce trouble doit disparaître après collage. La force de pelage (test de pelage à 90 °) peut varier entre 10 et 25 N/25mm.

Les PSA disponibles sur le marché et convenant à une utilisation en tant qu'adhésif dans la présente invention sont des PSA de qualité optique, également très utilisés dans le domaine des écrans d'affichage. On peut citer à titre d'exemple des produits commercialisés par la société Nitto Denko, tels que le PSA CS 9621, ou encore l'adhésif 3M 8141, commercialisé par la société 3M.

La couche de PSA peut être appliquée sur le film en polymère thermoplastique avant ou après application du revêtement anti-abrasif, mais est de préférence appliquée après celui-ci. La couche PSA peut éventuellement être protégée par une couche à faible adhérence qui sera décollée par pelage directement avant application de la couche d'adhésif sur le substrat.

Il est également possible d'utiliser dans le cadre de l'invention un adhésif thermofusible. Le terme adhésif thermofusible englobe les HMA classiques qui peuvent fondre et durcir un grand nombre de fois, mais également les HMA réactifs qui sont appliqués comme des HMA classiques mais réticulent et forment ainsi des liaisons adhésives permanentes qu'il est impossible de faire fondre une nouvelle fois.

Des adhésifs thermofusibles de qualité optique sont de préférence des adhésifs à base de polyuréthannes qui se présentent sous forme de dispersions aqueuses de polyuréthannes de haut poids moléculaire. La société Bayer commercialise deux adhésifs thermofusibles appropriés sous les dénominations Dispercoll^{®} U 42 et KA-8758. La société Bond Polymers International LLC propose également deux adhésifs thermofusibles sous forme de dispersions aqueuses de polyuréthannes sous les références Bondthane^{®} UD-104 et Bondthane® UD-108. Ces dispersions aqueuses peuvent être mélangées, avant application, avec des additifs destinés à modifier leurs propriétés rhéologiques, mécaniques ou optiques. Ainsi, l'ajout d'une silice colloïdale se traduira par une dureté et une durabilité accrues.

Les polymères thermofusibles peuvent être choisis parmi les polyoléfines, les polyamides, les polyuréthannes, les poly(uréthane urée), les poly(vinylpyrrolidone), les polyesters, les poly(ester amide), les poly(oxazolines), les systèmes à base de polymères acryliques. Des polyoléfines appropriées en tant qu'adhésifs thermofusibles sont décrites par exemple dans le brevet US 5128388. On préfère en particulier des polyoléfines choisies parmi les copolymères à blocs élastomères tels que ceux comprenant des blocs de polystyrène, de polybutadiène, de polyisoprène ou des blocs qui sont des copolymères d'éthylène et de butylène.

L'épaisseur de la couche d'adhésif est généralement comprise entre 10 et 50 µm, de préférence entre 15 et 30 µm.

Le film anti-abrasif selon l'invention peut être fabriqué de la manière suivante.

Dans une première étape, le film thermoplastique peut être soumis à un traitement de surface qui est destiné à faciliter l'adhérence de la couche inférieure. Il peut notamment s'agir d'un traitement physique, par exemple par décharge corona, par plasma ou par bombardement ionique, ou d'un traitement de surface chimique, par exemple d'un traitement sodique à chaud sous ultrasons. Dans le cas d'un film thermoplastique en PET, on a de préférence recours à un traitement par plasma d'oxygène excité par micro-ondes. Dans le cas d'un film en TAC, on préfère utiliser des traitements chimiques. On notera qu'il n'est pas nécessaire d'appliquer une couche de primaire sur le film thermoplastique, ce qui simplifie le procédé de fabrication du film, et donc de l'article optique, selon l'invention.

Dans une seconde étape, la couche inférieure est appliquée sur le film thermoplastique selon des procédés connus, par exemple par centrifugation (*spin coating*), par immersion (*dip coating*), par étalement (*bar coating*), ou par pulvérisation (*spray coating*), de préférence par centrifugation.

Elle est ensuite pré-polymérisée. On obtient ainsi un film vernis qui est ensuite enduit, après refroidissement, et de préférence également par centrifugation, de la couche supérieure. Après polymérisation, on obtient un film anti-abrasif selon l'invention.

Dans le cas où le film thermoplastique porte une couche d'adhésif sur sa face opposée à celle portant la couche inférieure, ce procédé peut en outre comprendre une étape consistant à soumettre le film thermoplastique à un traitement de surface physique ou chimique, tel que décrit précédemment, avant application de l'adhésif. Dans le cas où ce film porte déjà le revêtement anti-abrasif, il pourra être utile de protéger la couche supérieure de ce revêtement à l'aide d'un film sacrificiel, afin d'éviter d'endommager le revêtement pendant le traitement de surface.

Le substrat transparent en verre organique et le film anti-abrasif selon l'invention sont ensuite collés ensemble. Ces étapes de collage sont de préférence précédées d'une étape de thermoformage du film anti-abrasif, à une température inférieure à la température de transition vitreuse du polymère thermoplastique. Cette étape de thermoformage a essentiellement pour but de donner au film anti-abrasif une forme similaire à celle de la surface sur laquelle il sera collé, afin d'éviter des contraintes, des plies ou l'endommagement du film anti-abrasif lors de l'étape de collage. La température de thermoformage est de préférence inférieure d'au moins 10 °C à la température de transition vitreuse.

Le thermoformage et le collage du film anti-abrasif sur le substrat en verre organique peuvent être mis en oeuvre selon des techniques connues dans l'art. On peut citer à titre d'exemples de tels procédés ceux décrits en détail dans les demandes EP 2018262 et WO 2006/105999, toutes deux au nom de la Demanderesse.

Lorsque l'article optique est une lentille ophtalmique et en particulier une lentille ophtalmique fine, le film anti-abrasif est avantageusement déposé sur les deux faces du substrat organique, c'est-à-dire sur la face arrière et la face avant de la lentille. On préfère que le film anti-abrasif soit au moins collé sur la face convexe (généralement la face avant) d'une lentille ophtalmique.

Comme indiqué en introduction, le film selon l'invention peut être avantageusement appliqué sur des lentilles ophtalmiques très fines, à dioptrie négative, présentant de très faibles épaisseurs au centre. Dans un mode de réalisation particulièrement préféré, l'article optique de la présente invention est par conséquent une lentille ophtalmique ayant une épaisseur minimale au centre inférieure à 2 mm, de préférence inférieure à 1,5 mm, de manière encore plus préférée inférieure à 1,2 mm, cette épaisseur englobant à la fois le substrat organique et le ou les films anti-abrasif(s) collé(s) sur celui-ci.

Il est ensuite possible de déposer un film anti-reflets sur l'article optique, au-dessus de la couche supérieure. Les revêtements anti-reflets sont bien connus et comprennent classiquement un empilement monocouche ou multicouche de matériaux diélectriques tels que SiO, SiO₂, Al₂O₃, MgF₂, LiF, Si₃N₄, TiO₂, ZrO₂, Nb₂O₅, Y₂O₃, HfO₂, Sc₂O₃, Ta₂O₅, Pr2O₃ et leurs mélanges. On préfère utiliser un empilement multicouche comprenant une alternance de couches diélectriques minérales de haut indice de réfraction (IR > 1,55) et de bas indice de réfraction (IR < 1,55), ces dernières comprenant avantageusement un mélange de SiO₂ et de Al₂O₃.

L'article optique ainsi obtenu se caractérise notamment :
- par une excellente résistance à l'abrasion, correspondant à une valeur BAYER ISTM d'au moins 7, de préférence comprise entre 8 et 10, cette valeur étant mesurée suivant la norme ASTM F735-81 avec les modifications suivantes : 300 cycles sont réalisés au lieu de 200, et la poudre abrasive est de l'alumine ZF 152412 fournie par la société Ceramic Grains; et/ou
- par une bonne résistance aux rayures, correspondant à une note de 1 à 3 dans le test à la paille de fer. Ce test consiste à effectuer cinq allers-retours avec une paille de fer, dans le sens des fibres, sur la face d'un article optique selon l'invention, en frottant manuellement la surface avec une amplitude de 4 à 5 cm, tout en appliquant une pression constante sur la paille de fer (5 kg à l'aller et 2,5 kg au retour). L'article optique est ensuite essuyé avec un chiffon sec, rincé à l'alcool et inspecté visuellement pour lui attribuer une note de 1 si aucune rayure n'est observée et 3 si le verre est assez rayé, une note de 5 correspondant à un verre très rayé ; et/ou

- une parfaite adhérence, correspondant à une valeur de 0, à sec comme après vieillissement pendant 80 h, dans le test d'adhérence ("cross-hatch test"") décrit dans la norme ASTM D3359-93 ; et/ou
- une excellente résistance aux chocs, mesurée selon la norme ANSI Standard Z 80.1-1987.

L'invention sera maintenant décrite plus en détail à l'aide de l'exemple suivant qui est donné à des fins d'illustration uniquement et n'a pas pour but de limiter la portée de l'invention, définie par les revendications annexées.

### Exemple

### Substrat organique

On utilise des verres organiques en polycarbonate ayant un indice de réfraction de 1,59 (Airwear^{®} commercialisé par la société Essilor), une dioptrie de -1,50 et une épaisseur au centre de 0,9 mm ou de 1,1 mm. Ces verres sont soumis, avant application des films anti-abrasifs selon l'invention, à un traitement de surface par plasma d'oxygène sous pression réduite.

### Film anti-abrasif

On utilise en tant que film thermoplastique transparent
- un film en triacétate de cellulose (FT TD 80SL commercialisé par la société Fuji) d'une épaisseur de 80 µm et d'une température de transition vitreuse, déterminée par analyse mécanique dynamique (DMA de l'anglais *Dynamic Mecanical Analysis*), de 170 °C, ou
- un film en poly(éthylène téréphtalate) (U34^{®} commercialisé par Toray Co.) d'une épaisseur de 75 µm (température de transition vitreuse déterminée par DMA = 119 °C).

Le film en PET est soumis à un traitement par plasma d'oxygène excité par micro-ondes, tandis que le film en TAC trempé dans un bain chaud (à environ 40°C) de soude à 5% pendant 3 à 4 minutes, suivi de rinçages à l'eau et d'un séchage. Ces films sont ensuite découpés en une feuille de 15 x 22 cm.

Après une durée de 8 heures suivant le passage dans la soude pour le film en TAC et dans l'heure qui suit le traitement plasma pour le PET, on dépose ensuite sur ces films une composition de couche inférieure, préalablement filtrée et reposée, constituée de :
GLYMO : 65,95 % ; TEOS : 14,40 % ; acide itaconique : 14,99 % ; dicyandiamide : 4,66%,
les pourcentages ci-dessus étant donnés en poids de matière sèche par rapport au poids total de la matière sèche de la couche (qui ne comprend pas le tensioactif, l'acide chlorhydrique et le solvant).

Le rapport en poids de l'époxysilane (GLYMO) à l'alcoxysilane (TEOS) de cette couche est donc égal à Ri = 4,58.

Cette couche est appliquée par centrifugation dans les conditions suivantes :
- vitesse de rotation pendant l'application : 200 tours/minute,
- déplacement du bras du centre de l'échantillon vers le bord,
- vitesse de rotation après application : 900 à 1.100 tours/minute pendant 20 secondes.

L'épaisseur de la couche inférieure est fixée à 3 µm et contrôlé par SMR. La couche inférieure est ensuite pré-polymérisée 20 minutes à 85°C en étuve.

Après refroidissement des films vernis, on dépose sur ceux-ci, par centrifugation dans les mêmes conditions, une composition de couche supérieure d'une épaisseur de 1 µm, constituée de :
GLYMO : 48,07 % ; TEOS : 47,90 % ; dicyandiamide : 4,03%,
les pourcentages ci-dessus étant donnés en poids de matière sèche par rapport au poids total de la matière sèche de la couche (qui ne comprend pas le tensioactif, l'acide phosphorique et le solvant).

Le rapport en poids de l'époxysilane (GLYMO) à l'alcoxysilane (TEOS) de cette couche est donc égal à Rs = 1,00.

L'ensemble est ensuite polymérisé 3 heures à 100°C en étuve.

On obtient ainsi des films anti-abrasifs selon l'invention.

On peut ensuite appliquer sur la face opposée des films ainsi obtenus, une couche de PSA acrylique (Nitto CS9621) en une épaisseur d'environ 25 µm.

Les films anti-abrasifs sont ensuite thermoformés à une température d'environ 100 °C afin de leur donner la forme de la surface sur laquelle ils seront collés.

### Collage

Le collage des films anti-abrasifs sur les lentilles en verre organique se fait au moyen du procédé décrit dans WO 2006/105999, par application d'une pression uniforme d'environ 0,03 MPa par le biais d'un tampon déformable.

Les lentilles ainsi obtenues sont ensuite soumises à un usinage à l'aide d'une détoureuse National Optronics 6E et fraisées à la forme d'un disque de 50 mm de diamètre.

## Revendications

1. Film anti-abrasif comprenant :
(a) un film transparent en polymère thermoplastique, et
(b) un revêtement composite anti-abrasif recouvrant le film transparent, ledit revêtement comprenant :
(i) une couche inférieure disposée sur le film transparent, obtenue par hydrolyse puis durcissement d'une composition de couche inférieure comprenant au moins un époxysilane et au moins un alcoxysilane, dans un rapport en poids (Ri), en matière sèche, de l'époxysilane à l'alcoxysilane d'au moins 3,
(ii) une couche supérieure disposée sur la couche inférieure, obtenue par hydrolyse puis durcissement d'une composition de couche supérieure comprenant au moins un époxysilane et au moins un alcoxysilane, dans un rapport en poids (Rs), en matière sèche, de l'époxysilane à l'alcoxysilane d'au plus 2.

2. Film anti-abrasif selon la revendication 1, **caractérisé en ce que** le polymère thermoplastique formant le film transparent est choisi parmi le triacétate de cellulose (TAC) et le poly(éthylène téréphtalate) (PET).

3. Film anti-abrasif selon l'une quelconque des revendications 1 et 2, **caractérisé en ce que** le film transparent en polymère thermoplastique a une épaisseur comprise entre 50 µm et 150 µm, de préférence entre 60 µm et 100 µm.

4. Film anti-abrasif selon l'une quelconque des revendications 1 à 3, **caractérisé en ce que** le revêtement anti-abrasif a une épaisseur comprise entre 1 et 15 µm, de préférence comprise entre 2 et 10 µm, l'épaisseur de la couche inférieure étant plus grande que celle de la couche supérieure.

5. Film anti-abrasif selon l'une quelconque des revendications 1 à 4, **caractérisé en ce que** les époxysilanes de la composition de couche supérieure et de la composition de couche inférieure sont indépendamment choisis parmi les époxysilanes de formule (I) :
RₙYₘSi(X)₄₋ₙ₋ₘ (I)
où :
R désigne un groupe organique monovalent lié au silicium par un atome de carbone et contenant au moins une fonction époxy,
X désigne un groupe hydrolysable, de préférence un groupe -OR₁ où R₁ désigne un groupe alkyle linéaire ou ramifié, de préférence en C₁-C₄, un groupe alcoxyalkyle ou acyloxy, un atome d'halogène ou un groupe amino éventuellement substitué par un ou deux groupes alkyle ou silane, de préférence X désigne un groupe alcoxy,
Y désigne un groupe organique monovalent lié au silicium par un atome de carbone et ne contenant pas de fonction époxy, tel qu'un groupe hydrocarboné, saturé ou insaturé, en C₁-C₁₀ et, mieux, en C₁-C₄, en particulier un groupe alkyle, et
n et m sont des entiers tels que : n = 1 ou 2 avec n + m = 1 ou 2.

6. Film anti-abrasif selon la revendication 5, **caractérisé en ce que** les époxysilanes de la composition de couche supérieure et de la composition de couche inférieure sont indépendamment choisis parmi les époxysilanes de formule RSi(X)₃, tels que le γ-glycidoxypropyl triéthoxysilane, le γ-glycidoxypropyl triméthoxysilane, le 2-(3,4-époxycyclohexyl) éthyltriméthoxysilane, et le 2-(3,4-époxycyclohexyl) éthyltriéthoxysilane, de préférence le γ-glycidoxypropyl triméthoxysilane (GLYMO).

7. Film anti-abrasif selon l'une quelconque des revendications 1 à 6, **caractérisé en ce que** les alcoxysilanes de la composition de couche supérieure et de la composition de couche inférieure sont indépendamment choisis parmi ceux de formule (II) :
Si(OR')₄ (II)
dans laquelle les groupes R' sont identiques ou différents les uns des autres et désignent des groupes alkyle linéaires en C₁-C₆ ou ramifiés en C₃-C₆.

8. Film anti-abrasif selon la revendication 7, **caractérisé en ce que** les alcoxysilanes de la composition de couche supérieure et de la composition de couche inférieure sont indépendamment choisis parmi les orthosilicates de tétraalkyle tels que le tétraéthoxysilane (ou TEOS), le tétraméthoxysilane (ou TMOS), le tétra(n-propoxy)silane, le tétra(iso-propoxy)silane, le tétra(n-butoxy)silane, le tétra(sec-butoxy)silane et le tétra(t-butoxy)silane, de préférence le tétraéthoxysilane (TEOS).

9. Film anti-abrasif selon l'une quelconque des revendications 1 à 8, **caractérisé en ce que** Ri est au moins égal à 3,5, de préférence au moins égal à 4 voire au moins égal à 4,5.

10. Film anti-abrasif selon l'une quelconque des revendications 1 à 9, **caractérisé en ce que** Rs est inférieur à 1,5, de préférence inférieur à 1.

11. Film anti-abrasif selon l'une quelconque des revendications 1 à 10, **caractérisé en ce qu'il** renferme en outre une couche d'adhésif appliquée sur la face du film transparent opposée à celle portant le revêtement anti-abrasif.

12. Article optique, notamment lentille ophtalmique, comprenant :
(a) un substrat transparent en verre organique,
(b) une couche adhésive recouvrant au moins une des faces du substrat transparent, et
(c) un film anti-abrasif tel que défini dans l'une quelconque des revendications 1 à 11.

13. Article optique selon la revendication 12, **caractérisé en ce qu'il** s'agit d'une lentille ophtalmique dans laquelle les deux faces du substrat sont couvertes d'un film anti-abrasif.

14. Article optique selon l'une des revendications 12 et 13, **caractérisé en ce qu'il** a une épaisseur minimale au centre inférieure à 2 mm, de préférence inférieure à 1,5 mm, de manière encore plus préférée inférieure à 1,2 mm.

15. Procédé de fabrication d'un article optique selon l'une quelconque des revendications 12 à 14, comprenant :
A. la mise à disposition d'un substrat organique transparent, de préférence d'un substrat de lentille ophtalmique,
B. la mise à disposition d'au moins un film anti-abrasif selon la revendication 11,
C. la mise en contact de la couche d'adhésif du film anti-abrasif avec le substrat organique, et
D. l'application d'une pression uniforme sur toute la zone de contact de manière à faire adhérer le film anti-abrasif sur le substrat organique.

16. Procédé de fabrication d'un article optique selon l'une des revendications 12 à 14, comprenant :
a. la mise à disposition d'un substrat organique transparent, de préférence d'un substrat de lentille ophtalmique, recouvert sur au moins une de ses faces d'une couche d'adhésif,
b. la mise à disposition d'au moins un film anti-abrasif selon l'une quelconque des revendications 1 à 10,
c. la mise en contact de la face du film anti-abrasif portant le film transparent avec la couche d'adhésif, et
d. l'application d'une pression uniforme sur toute la zone de contact de manière à faire adhérer le film anti-abrasif sur le substrat organique.

## Patentansprüche

1. Abriebfeste Folie, umfassend:
(a) eine transparente Folie aus thermoplastischem Polymer und
(b) eine abriebfeste Verbundbeschichtung, die die transparente Folie bedeckt, wobei die Beschichtung
(i) eine auf der transparenten Folie angeordnete untere Schicht, erhalten durch Hydrolyse und anschließende Härtung einer Zusammensetzung für die untere Schicht, die mindestens ein Epoxysilan und mindestens ein Alkoxysilan in einem Gewichtsverhältnis (Ru), bezogen auf Trockensubstanz, von Epoxysilan zu Alkoxysilan von mindestens 3 umfasst,
(ii) eine auf der unteren Schicht angeordnete obere Schicht, erhalten durch Hydrolyse und anschließende Härtung einer Zusammensetzung für die obere Schicht, die mindestens ein Epoxysilan und mindestens ein Alkoxysilan in einem Gewichtsverhältnis (Ro), bezogen auf Trockensubstanz, von Epoxysilan zu Alkoxysilan von höchstens 2 umfasst,
umfasst.

2. Abriebfeste Folie nach Anspruch 1, **dadurch gekennzeichnet, dass** das die transparente Folie bildende thermoplastische Polymer aus Cellulosetriacetat (CTA) und Poly(ethylenterephthalat) (PET) ausgewählt ist.

3. Abriebfeste Folie nach einem der Ansprüche 1 und 2, **dadurch gekennzeichnet, dass** die transparente Folie aus thermoplastischem Polymer eine Dicke zwischen 50 µm und 150 µm und vorzugsweise zwischen 60 µm und 100 µm aufweist.

4. Abriebfeste Folie nach einem der Ansprüche 1 bis 3, **dadurch gekennzeichnet, dass** die abriebfeste Beschichtung eine Dicke zwischen 1 und 15 µm und vorzugsweise zwischen 2 und 10 µm aufweist, wobei die Dicke der unteren Schicht größer ist als die Dicke der oberen Schicht.

5. Abriebfeste Folie nach einem der Ansprüche 1 bis 4, **dadurch gekennzeichnet, dass** die Epoxysilane der Zusammensetzung der oberen Schicht und der Zusammensetzung der unteren Schicht unabhängig aus den Epoxysilanen der Formel (I) ausgewählt sind:
RₙYₘSi(X)₄₋ₙ₋ₘ (I)
wobei:
R für eine einwertige organische Gruppe, die über ein Kohlenstoffatom an das Silicium gebunden ist und mindestens eine Epoxidfunktion enthält, steht,
X für eine hydrolysierbare Gruppe, vorzugsweise eine -OR₁-Gruppe, wobei R₁ für eine lineare oder verzweigte Alkylgruppe, vorzugsweise C₁-C₄-Alkylgruppe, eine Alkoxyalkyl- oder Acyloxygruppe,
ein Halogenatom oder eine Aminogruppe, die gegebenenfalls durch eine oder zwei Alkyl- oder Silangruppen substituiert ist, und vorzugsweise für eine Alkoxygruppe steht,
Y für eine einwertige organische Gruppe, die über ein Kohlenstoffatom an das Silicium gebunden ist und keine Epoxidfunktion enthält, wie eine gesättigte oder ungesättigte C₁-C₁₀-Kohlenwasserstoffgruppe und besser C₁-C₄-Kohlenwasserstoffgruppe, insbesondere eine Alkylgruppe, steht und
n und m für solche ganze Zahlen stehen, dass: n = 1 oder 2 mit n + m = 1 oder 2.

6. Abriebfeste Folie nach Anspruch 5, **dadurch gekennzeichnet, dass** die Epoxysilane der Zusammensetzung der oberen Schicht und der Zusammensetzung der unteren Schicht unabhängig aus den Epoxysilanen der Formel RSi(X)₃, wie γ-Glycidoxypropyltriethoxysilan, γ-Glycidoxypropyltrimethoxysilan, 2-(3,4-Epoxycyclohexyl)ethyltrimethoxysilan und 2-(3,4-Epoxycyclohexyl)ethyltriethoxysilan, vorzugsweise γ-Glycidoxypropyltrimethoxysilan (GLYMO), ausgewählt sind.

7. Abriebfeste Folie nach einem der Ansprüche 1 bis 6, **dadurch gekennzeichnet, dass** die Alkoxysilane der Zusammensetzung der oberen Schicht und der Zusammensetzung der unteren Schicht unabhängig aus denjenigen der Formel (II) ausgewählt sind:
Si(OR')₄ (II)
worin die R'-Gruppen gleich oder voneinander verschieden sind und für lineare C₁-C₆-Alkylgruppen oder verzweigte C₃-C₆-Alkylgruppen stehen.

8. Abriebfeste Folie nach Anspruch 7, **dadurch gekennzeichnet, dass** die Alkoxysilane der Zusammensetzung der oberen Schicht und der Zusammensetzung der unteren Schicht unabhängig aus Tetraalkylorthosilicaten, wie Tetraethoxysilan (oder TEOS), Tetramethoxysilan (oder TMOS), Tetra(n-propoxy)-silan, Tetra(isopropoxy)silan, Tetra(n-butoxy)-silan, Tetra(sec.-butoxy)silan und Tetra(t-butoxy)silan, vorzugsweise Tetraethoxysilan (TEOS), ausgewählt sind.

9. Abriebfeste Folie nach einem der Ansprüche 1 bis 8, **dadurch gekennzeichnet, dass** Ru mindestens gleich 3,5, vorzugsweise mindestens gleich 4 oder sogar mindestens gleich 4,5 ist.

10. Abriebfeste Folie nach einem der Ansprüche 1 bis 9, **dadurch gekennzeichnet, dass** Ro kleiner als 1,5 und vorzugsweise kleiner als 1 ist.

11. Abriebfeste Folie nach einem der Ansprüche 1 bis 10, **dadurch gekennzeichnet, dass** sie außerdem eine auf der Seite der transparenten Folie, die der Seite mit der abriebfesten Beschichtung gegenüberliegt, aufgebrachte Klebstoffschicht enthält.

12. Optischer Artikel, insbesondere ophthalmische Linse, umfassend:
(a) ein transparentes Substrat aus organischem Glas,
(b) eine Klebeschicht, die mindestens eine der Seiten des transparenten Substrats bedeckt, und
(c) eine abriebfeste Folie gemäß einem der Ansprüche 1 bis 11.

13. Optischer Artikel nach Anspruch 12, **dadurch gekennzeichnet, dass** es sich um eine ophthalmische Linse handelt, bei der die beiden Seiten des Substrats mit einer abriebfesten Folie bedeckt sind.

14. Optischer Artikel nach einem der Ansprüche 12 und 13, **dadurch gekennzeichnet, dass** seine minimale Dicke in der Mitte kleiner als 2 mm, vorzugsweise kleiner als 1,5 mm und noch weiter bevorzugt kleiner als 1,2 mm ist.

15. Verfahren zur Herstellung eines optischen Artikels nach einem der Ansprüche 12 bis 14, bei dem man:
A. ein transparentes organisches Substrat, vorzugsweise ein Substrat für eine ophthalmische Linse, bereitstellt,
B. mindestens eine abriebfeste Folie nach Anspruch 11 bereitstellt,
C. die Klebstoffschicht der abriebfesten Folie mit dem organischen Substrat in Kontakt bringt und
D. auf die gesamte Kontaktzone einen einheitlichen Druck ausübt, damit die abriebfeste Folie auf dem organischen Substrat haftet.

16. Verfahren zur Herstellung eines optischen Artikels nach einem der Ansprüche 12 bis 14, bei dem man:
a. ein transparentes organisches Substrat, vorzugsweise ein Substrat für eine ophthalmische Linse, das auf mindestens einer seiner Seiten mit einer Klebstoffschicht bedeckt ist, bereitstellt,
b. mindestens eine abriebfeste Folie nach einem der Ansprüche 1 bis 10 bereitstellt,
c. die Seite der abriebfesten Folie mit der transparenten Folie mit der Klebstoffschicht in Kontakt bringt und
d. auf die gesamte Kontaktzone einen einheitlichen Druck ausübt, damit die abriebfeste Folie auf dem organischen Substrat haftet.

## Claims

1. Abrasion-resistant film comprising:
(a) a transparent film made of thermoplastic polymer, and
(b) an abrasion-resistant composite coating covering the transparent film, said coating comprising:
(i) a lower layer placed on the transparent film, obtained by hydrolysis then curing of a lower layer composition comprising at least one epoxysilane and at least one alkoxysilane, in a weight ratio (Ri), with respect to dry matter, of the epoxysilane to the alkoxysilane of at least 3,
(ii) an upper layer placed on the lower layer, obtained by hydrolysis then curing of an upper layer composition comprising at least one epoxysilane and at least one alkoxysilane, in a weight ratio (Rs), with respect to dry matter, of the epoxysilane to the alkoxysilane of at most 2.

2. Abrasion-resistant film according to Claim 1, **characterized in that** the thermoplastic polymer forming the transparent film is chosen from cellulose triacetate (CTA) and poly(ethylene terephthalate) (PET).

3. Abrasion-resistant film according to either one of Claims 1 and 2, **characterized in that** the transparent film made of thermoplastic polymer has a thickness of between 50 µm and 150 µm, preferably between 60 µm and 100 µm.

4. Abrasion-resistant film according to any one of Claims 1 to 3, **characterized in that** the abrasion-resistant coating has a thickness of between 1 and 15 µm, preferably between 2 and 10 µm, the thickness of the lower layer being greater than that of the upper layer.

5. Abrasion-resistant film according to any one of Claims 1 to 4, **characterized in that** the epoxysilanes of the upper layer composition and of the lower layer composition are independently chosen from the epoxysilanes of formula (I):
RₙYₘSi(X)₄₋ₙ₋ₘ (I)
where:
R denotes a monovalent organic group bonded to the silicon via a carbon atom and containing at least one epoxy function,
X denotes a hydrolyzable group, preferably an -OR₁ group where R₁ denotes a linear or branched, preferably C₁-C₄, alkyl group, an alkoxyalkyl or acyloxy group, a halogen atom or an amino group optionally substituted with one or two alkyl or silane groups, preferably X denotes an alkoxy group,
Y denotes a monovalent organic group bonded to the silicon via a carbon atom and not containing any epoxy function, such as a saturated or unsaturated, C₁-C₁₀, and better still C₁-C₄, hydrocarbon-based group, in particular an alkyl group, and
n and m are integers such that: n = 1 or 2 with n + m = 1 or 2.

6. Abrasion-resistant film according to Claim 5, **characterized in that** the epoxysilanes of the upper layer composition and of the lower layer composition are independently chosen from the epoxysilanes of formula RSi(X)₃, such as γ-glycidoxypropyltriethoxysilane, γ glycidoxypropyltrimethoxysilane, 2-(3,4-epoxycyclohexyl)ethyltrimethoxysilane and 2-(3,4-epoxycyclohexyl)ethyltriethoxysilane, preferably γ-glycidoxypropyltrimethoxysilane (GLYMO).

7. Abrasion-resistant film according to any one of Claims 1 to 6, **characterized in that** the alkoxysilanes of the upper layer composition and of the lower layer composition are independently chosen from those of formula (II):
Si(OR')₄ (II)
in which the R' groups are identical to or different from one another and denote linear C₁-C₆ or branched C₃-C₆ alkyl groups.

8. Abrasion-resistant film according to Claim 7, **characterized in that** the alkoxysilanes of the upper layer composition and of the lower layer composition are independently chosen from tetraalkyl orthosilicates, such as tetraethoxysilane (or TEOS), tetramethoxysilane (or TMOS), tetra(n-propoxy)silane, tetra(isopropoxy)silane, tetra(n-butoxy)silane, tetra (sec-butoxy)silane and tetra(t-butoxy) silane, preferably tetraethoxysilane (TEOS).

9. Abrasion-resistant film according to any one of Claims 1 to 8, **characterized in that** Ri is at least equal to 3.5, preferably at least equal to 4 or even at least equal to 4.5.

10. Abrasion-resistant film according to any one of Claims 1 to 9, **characterized in that** Rs is less than 1.5, preferably less than 1.

11. Abrasion-resistant film according to any one of Claims 1 to 10, **characterized in that** it also contains a layer of adhesive applied on the face of the transparent film opposite that bearing the abrasion-resistant coating.

12. Optical article, in particular ophthalmic lens, comprising:
(a) a transparent substrate made of organic glass,
(b) an adhesive layer covering at least one of the faces of the transparent substrate, and
(c) an abrasion-resistant film as defined in any one of Claims 1 to 11.

13. Optical article according to Claim 12, **characterized in that** it is an ophthalmic lens in which the two faces of the substrate are covered with an abrasion-resistant film.

14. Optical article according to either of Claims 12 and 13, **characterized in that** it has a minimum thickness at the center of less than 2 mm, preferably less than 1.5 mm, even more preferably less than 1.2 mm.

15. Process for manufacturing an optical article according to any one of Claims 12 to 14, comprising:
A. providing a transparent organic substrate, preferably an ophthalmic lens substrate,
B. providing at least one abrasion-resistant film according to Claim 11,
C. bringing the layer of adhesive of the abrasion-resistant film into contact with the organic substrate, and
D. applying a uniform pressure over the entire contact zone so as to cause the abrasion-resistant film to adhere on the organic substrate.

16. Process for manufacturing an optical article according to one of Claims 12 to 14, comprising:
a. providing a transparent organic substrate, preferably an ophthalmic lens substrate, covered on at least one of its faces with a layer of adhesive,
b. providing at least one abrasion-resistant film according to any one of Claims 1 to 10,
c. bringing the face of the abrasion-resistant film bearing the transparent film into contact with the layer of adhesive, and
d. applying a uniform pressure over the entire contact zone so as to cause the abrasion-resistant film to adhere on the organic substrate.
